# EUROPEAN PATENT APPLICATION

(11) **EP 2 455 357 A1**
(43) Date of publication of application: **23.05.2012**
(21) Application number: 11189139.6
(22) Date of filing: 15.11.2011
(51) Int. Cl.: C05F 9/04, C09K 17/52, A01G 13/02

(54) **Mushroom compost as mulch**

(30) Priority: 19.11.2010 NL 2005729
(71) Applicant: Agriculture Research & Development B.V., 5966 PJ AMERICA (NL)
(72) Inventor: Verdellen, Jacobus Henricus Johannes, 5962 PA Melderslo (NL); Altaf, Arif, 5629 ND Eindhoven (NL); Gheshlaghi, Nader, 5625 AG Eindhoven (NL)
(74) Representative: Algemeen Octrooi- en Merkenbureau

(57) **Abstract**

The present invention is in the field of mushroom growth, specifically on a method of treating mushroom compost, a product obtainable thereby, and use thereof.

By treating mushroom compost, normally being a low value or waste material, value is added. Even further, by treating mushroom compost it can be re-used, thereby reducing negative environmental effects.

## Description

### FIELD OF INVENTION

The present invention is in the field of mushroom growth, specifically on a method of treating mushroom compost and use thereof.

### BACKGROUND OF THE INVENTION

Mushroom growth has been studied during centuries. Many species of mushrooms seemingly appear overnight, growing or expanding rapidly. In actuality all species of mushrooms take several days to form primordial mushroom fruit bodies, though they do expand rapidly by the absorption of fluids.

Most mushrooms that are sold in supermarkets have been commercially grown on mushroom farms. The most popular of these, Agaricus bisporus, is generally considered safe for most people to eat because it is grown in controlled, sterilized environments, though some individuals do not tolerate it well. Several varieties of A. bisporus are grown commercially, including whites, criminy, and portobello. Other cultivated species now available at many grocers include shiitake, maitake or hen-of-the-woods, oyster, and enoki.

White mushrooms, like all mushrooms, grow from microscopic spores, not seeds. Plant-like organisms growing from spores are called fungi.

Because mushrooms have no chlorophyll, they must get all their nutrients from organic matter in their growing medium. The growing medium called compost is scientifically formulated of various materials such as straw, corn cobs, cotton seed and cocoa seed hulls, gypsum and nitrogen supplements. Preparing the compost takes one to two weeks. Then it is pasteurized and placed in large trays or beds.

In two to three weeks, the compost becomes filled with the root structure of the mushroom, a network of lacy white filaments called mycelium. At that point, a layer of pasteurized peat moss is spread over the compost. It takes 10 to 25 days to produce mature mushrooms after the peat moss is applied. Size is no indication of maturity in mushrooms. Perfectly ripe ones vary from small buttons to large caps.

Each crop is harvested over a period of several weeks. Typically two or three crops are harvested. Then the compost does not generate enough crops anymore; it may be regarded as "exhausted". Then the tray or bed is emptied and the exhausted or used composite is steam-sterilized before the process begins again.

The main cost involved in the production of mushrooms includes compost production, harvesting and packaging.

Considerable effort has been made to reduce the costs involved in production it self, but less attention has been paid towards reducing further costs, specifically costs associated with waste material. In several countries the amount of waste compost produced is larger than the demand thereof. Further costs related to waste compost involve transportation, storage, use of containers, etc.

Waste mushroom compost is a big nuisance for the mushroom industry and for the environment. Its disposal is hard and uneconomical.

In view of Cradle to Cradle Design a bio mimetic approach to the design of systems is considered. Therein materials are viewed as nutrients circulating in healthy, safe metabolisms. It suggests that industry must protect and enrich ecosystems and nature's biological metabolism while also maintaining safe, productive technical metabolism for the high-quality use and circulation of organic and synthetic materials. Also in this perspective the present inventors have considered re-use of waste material, and have put effort in identifying options.

Various documents and publication relate to re-use of organic material.

JP 2003009654 (A) for instance recites a treatment method for making vegetable/animal waste in general into a medium, comprising reusing the vegetable/animal waste to make it into potting compost, to provide a plant growth base material or compression moulded culture soil, suitable for germinating and growing plants and easy to handle through process moulding using the compost, and to provide a greening bag using the material or the culture soil. The method comprises blending an auxiliary raw material with an organic raw material having as the main constituent the vegetable/animal waste, controlling the resultant product so as to uniform the grain size and the percentage of water content of the mixed raw material through disintegrating, stirring, and kneading treatments while adding water, subjecting the resultant product to pressurizing, kneading and mashing treatments to bring to a mixed raw material, and subjecting the resultant product to a heat/dry treatment at 200 °C - 450 °C in the low oxygen atmosphere to bring to sterile powdery and/or granular potting compost brought to a stable substance and moisture controlled to 15%-25%.

WO 2006/100483 relates to a method of screening biomass.

It is noted that the above method is cumbersome, expensive, requires additional material, puts limitations on the process, provides a product that is for some applications too rich in nutrients, etc. Mushroom compost can supply nutrients and increase the water-holding capacity of the soil.

Despite the above method there still is a long felt need to re-use waste compost, preferably mushroom waste e.g. in landfills. Most of the waste compost is nowadays still deposited as waste. Hardly or no solutions are provided yet to re-use said compost.

Frequently sold at landscape supply houses, mushroom compost can help amend garden soil, but should be used with caution. Mushroom compost is rich in soluble salts and other nutrients and can kill germinating seeds and harm salt-sensitive plants.

After every growing/harvesting cycle during mushroom farming, the compost is reduced because it is "used up," by the growing mushrooms. But it still has plenty nutrients left for gardeners and landscapers.

Used with care, mushroom compost also can be used as mulch around perennials, trees and shrubs, and for flower beds and vegetable gardens. For some applications mushroom compost needs to be "cured" first.

There are various types of mulches: such as nourishing mulch, or protective decorative mulch. Organic mulches such as wood chips, shredded wood (redwood or cedar), saw dust, newspaper clippings, pine needles, leaf mould, grass clippings or partially decomposed compost are nourishing mulches. Nourishing mulch encourages proliferation of soil micro-organisms, the beneficial fungi and bacteria that break down most of these mulches, release the nutrients contained within them, and convert the nutrients into a soluble form for an easy absorption by the roots.

All nourishing mulches modify physical and chemical compositions of a garden soil during microbial degradation. They prevent soil compacting, increase the soil binding capacity to nutrients and water retention. However, nourishing mulches need to be replaced when they have decomposed completely.

It is undesirable to use raw unheated compost, as it generates heat during decomposition. Commonly used mulch is mushroom compost. Mushroom compost can supply nutrients and increase the water-holding capacity of the soil.

Winter mulching is an option for a garden in cold climates. Plant roots have to be protected from freezing temperatures. Mulch helps in the control of weeds by cutting off sunlight for weed growth and choking the weeds.

Thus there still is a need for improved mulches and for re-using mushroom compost.

### SUMMARY OF THE INVENTION

The present invention relates to a method of treating mushroom compost, preferably waste mushroom compost, comprising the steps of
a) Providing the compost, to be treated, said compost comprising water, to a first separator, such as a screen;
b) separating the compost provided in step a) in said first separator into a first fraction, comprising smaller compost particles, and a second fraction, comprising larger compost particles,
c) Partially removing water from the larger compost particles thereby obtaining partially dried material,
d) Colouring said partially dried material obtained in step c) with a colorant material thereby obtaining a coloured material, and
e) Further reducing (removing) water from the coloured material, obtained in step d).

It is noted that sequence of steps may be different from the above indication, e.g. steps may be reversed. For instance separating the compost (step b) and reducing water there from (step c) may be reversed.

In this aspect, the present invention relates to a method of treating mushroom compost, preferably waste mushroom compost, and said method comprising the steps of:
i) partially removing water from the compost to be treated thereby obtaining partially dried material,
ii) Providing the compost obtained in step a) to a first separator, such as a screen;
iii) Separating in said first separator the compost provided in step ii) into a first fraction, comprising smaller compost particles, and a second fraction, comprising larger compost particles,
iv) Colouring said partially dried material obtained in step iii) with a colorant material thereby obtaining a coloured material, and
v) Further removing water from the coloured material obtained in step iv) to obtain treated compost.

It is further noted that the method may be continuous and/or batch-like. It is also noted that total processing time is as limited as possible, e.g. less than 3 weeks. Further, process steps may be optimised in terms of energy consumption, costs, volume/space used, time, yield, etc. For instance, as larger amounts of compost may be processed, reducing water can be performed by heating.

As indicated above mushroom compost, and especially waste mushroom compost, also referred to as spent compost, is made available for further use by the present method. This is a completely new idea. Further a complete new use for waste compost is provided by the present invention. It is noted that farmers have not re-used waste compost for the last 50 years, except directly as mulch or fertilizer, with the risks mentioned above. The present invention provides a further reduction in costs involved and generates in fact a novel source of income. Further the present method and product are in line with the cradle to cradle principle. Further nutrients still present in the compost become available to soil. Compost itself improves the structure of a soil. The present invention relates for instance to use of mushroom compost as protective decorative mulch. The spent compost is for instance transformed into beautiful coloured mulch. This mulch is very useful for the plants and trees and enhances the look of any garden walk way area. This spent compost mulch could stop excessive evaporation of water from the ground during hot summer season, also control weed growth. The material does not have any toxic material and is therefore very safe to use. It can for instance also be used in a play area for children or the like.

Using the spent compost as mulch has multiple advantages. As mentioned, the waste material (spent compost) is a big problem for disposal and is often sold for a negative price, e.g. taxes have to be paid. Further, this material is a nuisance for the environment, and may be a big source for insects and flies. Storage or dumping produces very bad odour which is a big issue in populated areas. Mulch could be sold for good price. It can be used to increase the beauty of any garden and it is also beneficial for plants and trees.

In a first step compost is provided to a separator for separating a coarse fraction, comprising larger particles, from a fine fraction, comprising smaller particles. It has been found experimentally that specifically larger particles are suited for further processing. The fine particles (dust) are removed. This is for example carried out on a screen with a hole size of 0.5 cm wherein particles of 5 0.5 cm fall through to form the small particle fraction, wherein particles of > 0.5 cm form the large particle fraction.

It has further been found experimentally that water needs to be removed from the compost, to a certain extend, in other words the amount of water present in compost needs to be reduced. Drying is an example of reducing water. Drying is a mass transfer process consisting of the removal of water moisture or moisture by evaporation from a solid (hereafter product). To be considered "drying", the final product must be a solid, such as particles. To achieve this, there must be a source of heat, and a sink of the vapour thus produced.

In the most common case, a gas stream, e.g., air, applies the heat by convection and carries away the vapour as humidity. Other possibilities are vacuum drying, where heat is supplied by conduction or radiation (or microwaves) while the vapour thus produced is reduced by the vacuum system. Another indirect technique is drum drying (used, for instance, for manufacturing potato flakes), where a heated surface is used to provide the energy and aspirators draw the vapour outside the room.

Methods of drying are for instance application of hot air (convective or direct drying), indirect or contact drying (heating through a hot wall), as drum drying, vacuum drying, dielectric drying (radiofrequency or microwaves being absorbed inside the material), freeze drying or lyophilisation, supercritical drying (superheated steam drying), natural air drying, vacuum drying, etc.

Reducing of water can also be performed by for instance centrifuging, spin-drying, etc.

Any method of reducing water is thus in principle considered. To material thus obtained having a lower amount of water is referred to as "dried material", irrespective of the way the amount of water is reduced.

In a further step the dried material is coloured with a suitable colorant. A colorant is something added to in this case compost to cause a change in colour. Colorants can be of various natures, such as dyes, pigments, biological pigments, inks, paint and coloured chemicals. Preferably the colorant is non-toxic for the environment. Depending on the type of colorant used further additives may be added, such as a vehicle (or binder), a relatively neutral or colourless material that suspends a pigment and gives paint its adhesion.

Typical colours are gold, bright red, brick red, dark brown, walnut brown and black.

In a next step further water is reduced, viz. the water content is lowered even further thereby stabilizing a product obtained and locking the colorant.

It is noted that in the present method hardly any further material is added to the compost. Such further material is typically limited to a few wt. % or less of colorant and optional additives. Further addition of small amounts of additives is considered, especially nutrients, in order to balance nutrition for a use considered.

As such the present invention overcomes one or more of the above problems and/or disadvantages.

Various elements of the present apparatus as well as advantages will be discussed below in detail.

### DETAILED DESCRIPTION OF THE INVENTON

In a first aspect the present invention relates to a method of treating mushroom compost, preferably waste mushroom compost, comprising the steps of
a) Providing the compost comprising water to a first separator, such as a screen;
b) Separating the compost into a first fraction, comprising smaller compost particles, and a second fraction, comprising larger compost particles,
c) Partially reducing water from the larger compost particles thereby obtaining partially dried material,
d) Colouring said partially dried material with a colorant material thereby obtaining a coloured material, and
e) Further reducing water from the coloured material.

In an example of the present method the second fraction is provided to a second separator and separated into a coarse fraction having particles larger than 5,0 cm, and a mid-sized fraction which mid-sized fraction is coloured. As such a mid-sized particle fraction is obtained, typically having particles in a size range of 0.5 cm - 5 cm, preferably from 1 cm - 3cm.

In an example of the present method the coarse fraction is grinded and provided to the first separator. As such all of the larger particles of the compost can be coloured, and no further waste is produced. The finer particles may be used as e.g. pot soil.

In an example of the present method the mid-sized fraction, comprises 80% or more compost particles larger than 0.5 cm and smaller than 5.0 cm, preferably 90% or more. By optimizing the separation process a homogeneous distribution of particles is obtained, having most or virtually all of the particles in the above size range. Such provides advantages in terms of further processing, e.g. colouring, and selling, in that for instance use as mulch provides a restful view. Particle size distribution is measured using e.g. a Camsizer of Retsch Technology. The particle size distribution is measured using dynamic image analysis according to ISO 13322-2:2006. This method provides both particle size and shape analysis for particles ranging from 1 micrometer to up to 30 millimetres.

In an example of the present method water is reduced from the larger compost particles to 20-50% moisture, preferably to 30-40% moisture, such as about 35%. It has been found experimentally that if the moisture of particles is too high colouring is hampered. It has been found experimentally that if the moisture of particles is too low, e.g. lower than about 20%, no further improvement is obtained, e.g. in terms of colouring.

In an example of the present method water is reduced from the particles at a temperature between 5-40 °C, such as at room temperature, for a period of 2 days to 14 days, such as about 7 days. It has been found experimentally that a relatively easy and cheap way of reducing water is at a relatively low temperature by leaving the particles to dry in the air, such as at room temperature.

In an example of the present method the colouring takes place in a mixer, preferably in a rotary mixer, preferably in a rotary mixer at 10-250 rpm, more preferably at 30-100 rpm, even more preferably at 40-75 rpm, such as 50 rpm. It has been found experimentally that a suitable way of colouring is in a mixer. A critical parameter therein as has been established experimentally is the rotary speed. The speed should not be too high, as for instance particles get crushed, and should not be too low, as now or insufficient colouring is obtained. Also the rotary speed has been found to influence a time needed for colouring.

Typically the colouring takes place in a period from 10 minutes to about 120 minutes, preferably from 20 minutes to about 60 minutes, such as about 30 minutes. The colouring may further take place at an elevated temperature from between 20-60 °C, or at room temperature.

Colouring and reducing of water may also be combined in one step.

In an example of the present method the colorant material is selected from the group comprising natural colorants, such as metal oxide, such as iron oxide, artificial colorant, dye, pigment, biological pigment, ink, paint and coloured chemicals. It has been found experimentally that for each colorant it needs to be established if the binding is sufficient. Binding is regarded sufficient if at least 75% of colorant remains bound to the compost for at least 6 month, or in other words the appearance of the compost must be maintained throughout said period. The binding of the colorant to the compost particles can for example be chemical binding (i.e. non-covalent or covalent binding, e.g. ionic binding or Van der Waals binding). Otherwise, the binding can be physical binding, e.g. by drying onto the surface of the particles or by impregnating in cavities in the particles.

In an example of the present method water is reduced from the coloured material to 5-30% moisture, preferably to 10-20% moisture, such as about 15%. Further reducing water improves stability of the product obtained. The moisture content should in this respect not be too high. There is no need to reduce the content to very low levels, e.g. below 5%. Even further, a natural habit of the compost is to absorb water anyhow.

In an example of the present method water is reduced from the coloured material at a temperature between 5-40 °C, such as at room temperature, for a period of 2 days to 14 days, such as about 2-3 days. The above considerations apply in this respect as well.

In a second aspect the present invention relates to an organic material, comprising more than 80 wt. % mushroom compost, preferably more than 90 wt. % mushroom compost, even more preferably more than 95 wt. % mushroom compost, most preferably more than 98 wt. % mushroom compost, and 0,1-2 wt% colorant material chemically and/or physically bound to the mushroom compost, preferably 0,5-1 wt%.

The colorant material is provided in an amount sufficient to colour the material. In view of costs not a too high amount is provided. It has been found experimentally that an amount of 0.1-2 wt %, depending on the type of colorant material, moisture content of the organic material, type of organic material, etc. will typically be sufficient. Preferably 0,5-1 wt% is used.

In an example the present organic material comprises 80% or more compost particles larger than 0.5 cm and smaller than 5.0 cm, preferably 90% or more.

In an example the present organic material comprises 5-30% moisture, preferably to 10-20% moisture, such as about 15%.

In an example the present organic material further comprises additives, such as plasticizers and release agents, fillers organic resins, antioxidants, photo-stabilizers, colorants, inorganic or organic fillers, reinforcing materials, such as carbon fibres or glass fibres, lubricants and antistatic agents. binders, plasticizers, curing catalysts, fluidizing agents, anti-pinhole agents, spectral sensitizers (sensitizing dyes) for improving the electro photographic sensitivity, other various chemical substances for preventing the increase of residual potential and the decreases of charging potential and sensitivity during repeated uses, antioxidants, surfactants, anti-curling agents and levelling agents, UV inhibitors. In order to further optimise the present material, e.g. in terms of stability, applicability, life span, etc., further additives may be provided.

In a third aspect the present invention relates to a use of the present organic material and/or a product obtained by the present method as mulch.

In an example the present invention relates to a use of the present organic material and/or a product obtained by the present method as a fertilizer.

In an example the present invention relates to a use of the present organic material and/or a product obtained by the present method as cover of soil.

The invention is further detailed by the accompanying figures, which are exemplary and explanatory of nature and are not limiting the scope of the invention.

### SUMMARY OF THE FIGURES

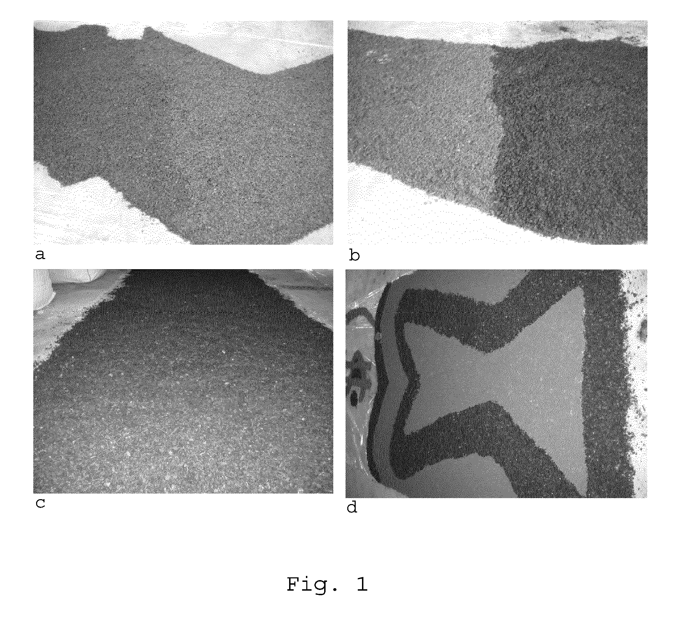

Fig. 1a-d is photographs showing the treated compost according to the present invention. Therein various patterns are shown, as well as various colours provided by the present invention.

### DETAILED DESCRIPTION OF THE INVENTION

In an example a sample of about 500 kg waste compost material is taken.

The waste material is spread out and dried at room temperature during about 7 days. As a result the moisture reduces from about 70% to about 30-50% (relative).

The partially dried spent compost material is then screened to a mesh size of 0.5-5 cm in one or two steps. First a screen having a mesh size of about 0.5 cm is used to (manually) filter out fine material. In general the fine material may be used as potting soil or the like. Than a second filtering step is performed, reducing large particles, by using a mesh size of about 5 cm. The large particles may be re-use and grinded to smaller particles. In other words a middle size fraction is obtained, wherein particles have a size of between 0.5 cm and 5 cm.

In a next step the partially dried and screened material is subjected to colorant material in a rotary mixer at 20 -100 rpm. The inventors have used a Limex M4 mixer, type 165 LS, having a volume of about 50 litres. The rotary mixer was set a speed of about 50 rpm for about 30 minutes at room temperature. 500 g of colorant was dissolved in about 8 litres of water. The solution obtained was used to colour about 100 I of waste compost, having a weight of about 50-60 kg. In other words about 10 g colorant per kg semi-dry compost was used, which is about 1 wt%.

Colorant material was obtained from Heartland (Heartland Enriched colorants). Specifically ameri-red, black and barn-red were used.

In a further step the coloured material was left to dry at room temperature for 3-4 days. The coloured material contained 10-15% moisture, which is at this point considered to be completely dried and ready for use.

Further embodiments are disclosed in the claims.

## Claims

1. Method of treating mushroom compost, preferably waste mushroom compost, said method comprising the steps of
a) providing the compost to be treated, said compost comprising water, to a first separator, such as a screen;
b) separating in said first separator the compost provided in step a) into a first fraction, comprising smaller compost particles, and a second fraction, comprising larger compost particles,
c) partially removing water from the larger compost particles thereby obtaining partially dried material,
d) colouring said partially dried material obtained in step c) with a colorant material thereby obtaining a coloured material, and
e) further removing water from the coloured material obtained in step d) to obtain treated compost.

2. Method of treating mushroom compost, preferably waste mushroom compost, said method comprising the steps of
i) partially removing water from the compost to be treated thereby obtaining partially dried material,
ii) providing the compost obtained in step a) to a first separator, such as a screen;
iii) separating in said first separator the compost provided in step ii) into a first fraction, comprising smaller compost particles, and a second fraction, comprising larger compost particles,
iv) colouring said partially dried material obtained in step iii) with a colorant material thereby obtaining a coloured material, and
v) further removing water from the coloured material obtained in step iv) to obtain treated compost.

3. Method according to claim 1 or 2 wherein the second fraction is provided to a second separator and separated into a coarse fraction having particles larger than 5,0 cm, and a mid-sized fraction which mid-sized fraction is coloured.

4. Method according to any of claims 1-3, wherein the coarse fraction is grinded and provided to the first separator.

5. Method according to any of claims 1-4, wherein the mid-sized fraction, comprises 80% or more compost particles larger than 0.5 cm and smaller than 5.0 cm, preferably 90% or more.

6. Method according to any of claims 1-5, wherein water is reduced from the larger compost particles to 20-50% moisture, preferably to 30-40% moisture, such as about 35%.

7. Method according to any of claims 1-6, wherein water is reduced from the particles at a temperature between 5-40 °C, such as at room temperature, for a period of 2 days to 14 days, such as about 7 days.

8. Method according to any of claims 1-7, wherein the colouring takes place in a mixer, preferably in a rotary mixer, preferably in a rotary mixer at 10-250 rpm, more preferably at 30-100 rpm, even more preferably at 40-75 rpm, such as 50 rpm.

9. Method according to any of claims 1-8, wherein the colorant material is selected from the group comprising natural colorants, such as metal oxide, such as iron oxide, artificial colorant, dye, pigment, biological pigment, ink, paint and coloured chemicals.

10. Method according to any of claims 1-9, wherein water is reduced from the coloured material to 5-30% moisture, preferably to 10-20% moisture, such as about 15%.

11. Method according to any of claims 1-10, wherein water is reduced from the coloured material at a temperature between 5-40 °C, such as at room temperature, for a period of 2 days to 14 days, such as about 2-3 days.

12. Organic material, comprising
more than 80 wt. % mushroom compost, preferably more than 90 wt. % mushroom compost, even more preferably more than 95 wt. % mushroom compost, most preferably more than 98 wt. % mushroom compost, and 0,1-2 wt% colorant material chemically and/or physically bound to the mushroom compost, preferably 0,5-1 wt%.

13. Organic material according to claim 11, comprising 80% or more compost particles larger than 0.5 cm and smaller than 5.0 cm, preferably 90% or more, and/or comprising 5-30% moisture, preferably to 10-20% moisture, such as about 15%.

14. Organic material according to any of claims 12-13, further comprising additives, such as plasticizers and release agents, fillers, organic resins, antioxidants, photo-stabilizers, colorants, inorganic or organic fillers, reinforcing materials, such as carbon fibres or glass fibres, lubricants and antistatic agents, binders, plasticizers, curing catalysts, fluidizing agents, anti-pinhole agents, spectral sensitizers (sensitizing dyes) for improving the electro photographic sensitivity, other various chemical substances for preventing the increase of residual potential and the decreases of charging potential and sensitivity during repeated uses, antioxidants, surfactants, anti-curling agents and levelling agents, and UV inhibitors.

15. Use of organic material according to any of claims 11-14 and/or a product obtained by the method of any of claims 1-10 as one or more of a mulch, a fertilizer, and cover of soil.
